# EUROPÄISCHE PATENTSCHRIFT

(11) **EP 1 183 422 B1**
(45) Veröffentlichungstag und Bekanntmachung des Hinweises auf die Patenterteilung: **08.10.2003**
(21) Anmeldenummer: 00920549.3
(22) Anmeldetag: 23.03.2000
(51) Int. Cl.: D21H 17/28, D21H 17/44, D21H 17/45, D21H 21/10, C08L 3/02, C08L 3/04

(54) **MODIFIZIERUNG VON STÄRKE MIT KATIONISCHEN POLYMEREN UND VERWENDUNG DER MODIFIZIERTEN STÄRKEN ALS TROCKENVERFESTIGUNGSMITTEL FÜR PAPIER**
MODIFYING STARCH WITH CATIONIC POLYMERS AND USE OF THE MODIFIED STARCHES AS DRY-STRENGTH AGENT FOR PAPER
MODIFICATION D'AMIDON AVEC DES POLYMERES CATIONIQUES ET UTILISATION DES AMIDONS MODIFIES COMME AGENTS CONFERANT AU PAPIER UNE RESISTANCE A L'ETAT SEC

(30) Priorität: 01.04.1999 DE 19915157
(43) Veröffentlichungstag der Anmeldung: 06.03.2002
(73) Patentinhaber: BASF AKTIENGESELLSCHAFT, 67056 Ludwigshafen (DE)
(72) Erfinder: LORENCAK, Primoz, D-67069 Ludwigshafen (DE); STANGE, Andreas, D-68199 Mannheim (DE); DIEHL, Kurt, D-67251 Freinsheim (DE); MAHR, Norbert, D-67117 Limburgerhof (DE)
(86) Internationale Anmeldenummer: EP0002567
(87) Internationale Veröffentlichungsnummer: WO00060167

(56) Entgegenhaltungen:
- WO-A-96/13525
- DE-A- 19 701 524
- DE-A- 19 713 755
- US-A- 3 854 970
- US-A- 5 859 128
- "IMPROVING FINE PARTICLE RETENTION IN NEWSPRINT FORMATION" RESEARCH DISCLOSURE,GB,INDUSTRIAL OPPORTUNITIES LTD. HAVANT, Nr. 3347, 1. März 1993 (1993-03-01), Seite 206 XP000359905 ISSN: 0374-4353

## Beschreibung

Die Erfindung betrifft ein Verfahren zur Modifizierung von Stärke durch Erhitzen von Stärke mit wenigstens einem kationischen Polymer in wäßrigem Medium auf Temperaturen oberhalb der Verkleisterungstemperatur der Stärke, die nach dem Verfahren erhältlichen modifizierten Stärken sowie die Verwendung der modifizierten Stärken als Trockenverfestigungsmittel bei der Herstellung von Papier, Pappe und Karton.

In Ullmann's Enzyklopädie der Technischen Chemie, 4. Aufl., Verlag Chemie, Weinheim, 1979, Bd. 17, S. 581 ff. wird allgemein die Verwendung von aufgeschlossenen, wasserlöslichen Stärken und von wasserlöslichen Stärkederivaten als Hilfsstoffe für die Papierherstellung, insbesondere zur Erhöhung der Festigkeit des Papiers beschrieben. Dabei ist jedoch die Retention der gelösten Stärken im Papier gering, was zu einer starken Belastung der Abwässer führt.

Die US-A-3,467,608 beschreibt ein Verfahren zur Herstellung einer kationischen Stärke durch Erhitzen einer wäßrigen Stärkeaufschlämmung unter Zusatz eines Polyalkylenimins, wie z.B. Polyethylenimin, oder eines Polyalkylenpolyamins, wie.Z.B.. Polyethylenpolyamin, wobei das Molekulargewicht des zur Modifizierung verwendeten Polymers mindestens 50000 beträgt. Bezogen auf den Feststoffgehalt enthält das Reaktionsgemisch 0,5 bis 40 Gew.-% des Polymerisats und 60 bis 99,5 Gew.-% Stärke. Dabei wird auch allgemein die Möglichkeit der Verwendung von durch Hydrolyse, Oxidation, Veresterung und Veretherung erhältlichen modifizierten Stärken beschrieben. Die resultierenden kationischen Stärkederivate werden als Flockungsmittel verwendet.

Die US-A-4,097,427 beschreibt ein Verfahren zur Kationisierung von Stärke, wobei eine wäßrige Stärkeaufschlämmung unter alkalischen Reaktionsbedingungen mit einem wasserlöslichen Polymer, das quaternäre Ammoniumgruppen enthält, in Gegenwart eines Oxidationsmittels umgesetzt wird. Dabei werden ausschließlich unmodifizierte oder gering abgebaute Stärken zur Modifizierung verwendet, bevorzugt Mais- und Tapiokastärke. Die quaternäre Ammoniumgruppen enthaltenden Polymere werden ausgewählt unter Polymeren mit Epichlorhydrineinheiten, quaternisierten Polyethyleniminen, quaternisierten Diallyldialkylaminpolymeren etc. Als Oxidationsmittel werden z.B. Ammoniumpersulfat, Wasserstoffperoxid, Natriumhypochlorit, Ozon oder tert.-Butylhydroperoxid verwendet. Der pH-Wert der Stärkeschlämmung wird mit wasserlöslichen Basen auf etwa 8 eingestellt. Die so hergestellten, modifizierten kationischen Stärken werden als Trockenverfestigungsmittel bei der Herstellung von Papier dem Papierstoff zugegeben. Bei diesem Verfahren wird das Abwasser jedoch durch einen sehr hphen CSB-Wert (CSB=chemischer Sauerstoffbedarf) belastet.

Aus der US-A-4,146,515 ist ein Verfahren zur Herstellung von kationischer Stärke bekannt, die für die Oberflächenleimung und Beschichtung von Papier- und Papierprodukten verwendet wird. Gemäß diesem Verfahren wird eine wäßrige Anschlämmung von oxidierter Stärke zusammen mit einem kationischen Polymeren in einem kontinuierlichen Kocher aufgeschlossen. Als kationische Polymere kommen Kondensate aus Epichlorhydrin und Dimethylamin, Polymerisate von Diallyldimethylammoniumchlorid, quaternisierte Reaktionsprodukte von Ethylenchlorid und Ammoniak sowie quaternisiertes Polyethylenimin in Betracht.

Aus der DE-A-3719480 ist ein Verfahren zur Herstellung von Papier, Pappe und Karton bekannt, wobei man als Trockenverfestigungsmittel eine Mischung einsetzt, die durch Erhitzen von nativer Kartoffelstärke in wäßrigem Medium in Gegenwart von Polyethylenimin auf Temperaturen oberhalb der Verkleisterungstemperatur der Stärke erhalten wird.

Aus der EP-A-0282761 ist ebenfalls ein verfahren zur Herstellung, von Papier, Pappe und Karton bekannt, wobei man als Trockenverfestigungsmittel eine Mischung einsetzt, die durch Erhitzen von nativer Kartoffelstärke mit Polyvinylamin in wäßriger Lösung auf Temperaturen von 70 bis 110°C erhältlich ist.

Nach dem aus der EP-A-0301372 bekannten Verfahren zur Herstellung von trockenfest ausgerüstetem Papier verwendet man als Trockenverfestigungsmittel eine Mischung, die man durch Erhitzen von enzymatisch abgebauter Stärke und kationischen Polymeren wie Polyvinylaminen bei Temperaturen bis zu 170°C erhält.

Aus der US-A-4880497 und der US-A-4978427 ist die Herstellung von Papier mit hoher Trocken- und Naßfestigkeit bekannt, wobei man entweder auf die Oberfläche des Papiers oder zum Papierstoff vor der Blattbildung ein hydrolysiertes Copolymerisat als Verfestigungsmittel zusetzt, das durch Polymerisieren von N-Vinylformamid und ethylenisch ungesättigten Monomeren wie Vinylacetat oder Alkylvinylether und Hydrolysieren von 30 bis 100 mol.-% der Formylgruppen des Copolymerisats unter Bildung von Aminogruppen erhältlich ist. Aus der WO-A-96/13525 ist ein Verfahren zur kationischen Modifizierung von Stärke durch Umsetzung von Stärke mit Polymeren, Diamino- und/oder Ammoniumgruppen enthalten, in wäßrigem Medium bei Temperaturen von 115 bis 180°C unter erhöhtem Druck bekannt, wobei nur ein geringfügiger Abbau der Stärke stattfindet.

Aus der WO-A-98/31711 ist ein Verfahren zur Modifizierung von Stärke bekannt, wobei man beispielsweise eine anionische Stärke mit einem kationischen Polymer, z.B. Polyvinylamin, bei Temperaturen von 80 bis 220°C in wäßrigem Medium umsetzt. Die so erhältlichen wäßrigen Lösungen werden als Trocken- und Naßverfestigungsmittel sowie als Entwässerungs- und Retentionsmittel bei der Herstellung von Papier, Pappe und Karton verwendet.

Die WO-A-98/45536 betrifft ein Verfahren zur Herstellung von Papier, Pappe und Karton mit hoher Trockenfestigkeit durch Zugabe von Stärken, die in wäßrigem Medium in Gegenwart von kationischen Polymeren aufgeschlossen werden. Dem Papierstoff wird außerdem ein kationisches Polymer als Retentionsmittel für Stärke zugesetzt. Aufgrund der höheren Retention wird ein geringerer CSB-Wert im Maschinenabwasser erreicht.

Bei allen oben angegebenen Verfahren, bei denen eine kationisch modifizierte Stärke als Trockenverfestigungsmittel dem Papierstoff zugesetzt wird, tritt jedoch bei der Blattbildung eine unerwünschte Erniedrigung der Entwässerungsgeschwindigkeit des Papierstoffs ein, die bei Einsatz von höheren Stärkemengen besonders ausgeprägt ist.

Der vorliegenden Erfindung liegt die Aufgabe zugrunde, modifizierte Stärke zur Verfügung zu stellen, die bei der Herstellung von Papier, Pappe und Karton außer einer erhöhten Retention von Stärke im Papier gegenüber den bekannten kationisch modifizierten Stärken eine höhere Entwässerungsgeschwindigkeit aufweist.

Die Aufgabe wird erfindungsgemäß gelöst mit einem Verfahren zur Modifizierung von Stärke durch Erhitzen von Stärke mit wenigstens einem kationischen Polymer in wäßrigem Medium auf Temperaturen oberhalb der Verkleisterungstemperatur der Stärke, wenn man die Modifizierung der Stärke in Gegenwart von.
(a) einem polymeren Kationisierungsmittel aus der Gruppe der Vinylamineinheiten enthaltenden Polymeren mit Molmassen Mw bis zu 1 Mio., Polyethylenimine, Polydiallyldimethylammoniumchloride, Kondensate von Dimethylamin mit Epichlorhydrin oder Dichloralkanen, Kondensate aus Dichlorethan und Ammoniak und Mischungen der genannten Verbindungen und
(b) polymeren Entwässerungsmitteln für Papier aus der Gruppe der wasserlöslichen, vernetzten Polyamidoamine, die gegebenenfalls mit Ethylenimin gepfropft sind, Acrylamid- oder Methacrylamideinheiten enthaltenden niohtionischen oder kationischen Polymeren mit Molmassen Mw von mehr als 1 Mio., Vinylamineinheiten enthaltenen Polymerisaten mit Molmassen Mw von mehr als 1 Mio. und Mischungen der genannten Verbindungen
durchführt. Gegenstand der Erfindung sind außerdem die Umsetzungsprodukte von Stärke mit kationischen Polymeren, die nach dem oben beschriebenen Verfahren erhältlich sind.

Man kann sämtliche Stärken nach dem erfindungsgemäßen Verfahren modifizieren, z.B. native Stärken, oxidierte native Stärken, Stärkeether, Stärkeester, oxidierte Stärkeether, oxidierte Stärkeester, kationische modifizierte Stärken oder amphotere Stärken.

Als native Stärken können Stärken aus der Gruppe Maisstärke, Kartoffelstärke, Weizenstärke, Reisstärke, Tapiostärke, Sagostärke, Sorghumstärke, Maniokstärke, Erbsenstärke oder Mischungen der genannten nativen Stärken eingesetzt werden. Es können auch Stärken verwendet werden, die einen Amylopektingehalt von mindestens 80 Gew.-% haben. Solche Stärken können beispielsweise durch Stärkef raktionierung üblicher nativer Stärken oder durch Züchtungs maßnahmen aus solchen Pflanzen gewonnen werden, die praktisch reine Amylopektinstärke produzieren, wie in Günther Tegge, Stärke und Stärkederivate, Hamburg, Behr's-Verlag 1984, Seite 157-160 beschrieben. Stärken mit einem Amylopektingehalt von mindestens 80 Gew.-% sind im Handel erhältlich. Sie werden im allgemeinen als Wachsmaisstärke, Wachskartoffelstärke oder Wachsweizenstärke bezeichnet.

Neben den nativen Stärken eignen sich auch hydrolytisch oder enzymatisch abgebaute Stärken, beispielsweise Dextrine, wie Weißoder Gelbdextrine und Maltodextrine, oder oxidierte Stärken, wie z.B. Dialdehydstärke. Weiterhin sind chemisch modifizierte Stärkken, z.B. mit anorganischen oder organischen Säuren veresterte, insbesondere phosphatierte und acetylierte Stärken sowie mit organischen Halogenverbindungen, Epoxiden oder Sulfaten veretherte Stärken geeignet. Stärken und Verfahren zu ihrem Abbau und ihrer chemischen Modifizierung werden in Ullmann's Encyclopedia of Industrial Chemistry, 5. Aufl., Bd. A25, S. 2 ff beschrieben, worauf hier Bezug genommen wird.

Die Oxidation von Stärken ist in Ullmann's Encyclopedia of Industrial Chemistry, Sixth Edition, 1998 beschrieben. Solche oxidierten Stärken können durch vielfältige Reaktionen hergestellt werden. Bei der Oxidation werden hierbei z.B. OH- oder Aldehydfunktionen in Carbonsäurefunktionen überführt. Diese Oxidation kann auch unter C₂-C₃-Bindungsbruch erfolgen. Zur Herstellung von oxidierten Stärken können alle schon erwähnten nativen Stärken verwendet werden.

Die anionische Modifizierung von Stärke ist in Günther Tegge, Stärke und Stärkederivate, Hamburg, Behr's-Verlag, 1984, S. 179 bis 185 beschrieben. Im allgemeinen handelt es sich bei der anionischen Modifizierung um eine Umsetzung der Stärke mit α-Halogencarbonsäuren, bevorzugt Chloressigsäure, und deren Salze oder um eine Veresterung der Stärke mit anorganischen oder organischen Säuren als anionischem Modifizierungsmittel, wobei bevorzugt zwei- oder mehrwertige Säuren verwendet werden. Für die anionische Modifizierung geeigneten Säuren sind z.B. Orthophosphorsäure, Metaphosphorsäure, Pyrophosphorsäure, Polyphosphorsäuren, phosphorige Säure, Schwefelsäure, Pyroschwefelsäure, Thioschwefelsäure, Orthokiesel, Metakieselsäure, Pyrokieselsäure, Polykieselsäuren, Orthoborsäure, Metaborsäure, Polyborsäuren, O-Ester der Dithiokohlensäure (Xanthogensäuren) , Oxalsäure, Malonsäure, Bernsteinsäure, Glutarsäure, Adipinsäure, Phthalsäure, Terephthalsäure, Apfelsäure, Zitronensäure etc. und deren Salze. Der Veresterungsgrad der so erhaltenen anionisch modifizierten Stärken beträgt im allgemeinen etwa 0,01 bis 100 Mol.-%, bevorzugt 0,1 bis 50 Mol.-%, insbesondere 0,2 bis 20 Mol.-%, bezogen auf die freien Hydroxylgruppen in der zur Modifizierung verwendeten Stärke. Dabei können mehrbasige Säuren auch mehrfach verestert sein. Vorzugsweise verwendet man für das erfindungsgemäße Verfahren oxidierte Stärken.

Besonders bevorzugt eingesetzte Stärken sind durch Oxidation von nativer Stärke hergestellte Dialdehydstärken sowie anionische Stärken. Die anionischen Stärken weisen vorzugsweise Carboxyl-, Phosphat- oder Sulfatgruppen oder jeweils die Alkalimetall- oder Ammoniumsalze dieser Gruppen auf. Besonders bevorzugt setzt man als anionische Stärke Carboxyl- und/oder Carboxylatgruppen enthaltende Stärke aus Kartoffeln, Mais, Weizen oder Tapioka ein. Besonders bevorzugt eingesetzte Stärken sind native Kartoffelstärke, oxidierte Kartoffelstärke und oxidierte Maisstärke. Die oxidierten Stärken enthalten Carboxyl- oder Carboxylatgruppen als anionische Gruppen. Der Substitutionsgrad der anionischen Stärken beträgt beispielsweise 0,0001 bis 0,3 D.S.

Mindestens eine Stärke oder eine Mischung von mehreren Stärken wird erfindungsgemäß in wäBrigem Medium in Gegenwart von
(a) mindestens einem polymeren Kationisierungsmittel und
(b) mindestens einem polymeren Entwässerungshilfsmittel für Papier erhitzt.

Geeignete Polymere Kationisierungsmittel sind beispielsweise Vinylamineinheiten enthaltende Polymere mit Molmassen bis zu 1 Mio. Polymerisate dieser Art werden nach bekannten Verfahren durch Polymerisieren von N-Vinylcarbonsäureamiden der Formel 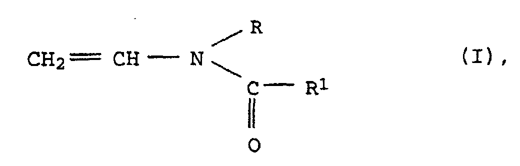 in der R, R¹=H oder C₁- bis C₆-Alkyl bedeutet, allein oder in Gegenwart von anderen damit copolymerisierbaren Monomeren und Hydrolyse der entstehenden Polymerisate mit Säuren oder Basen unter Abspaltung der Gruppierung 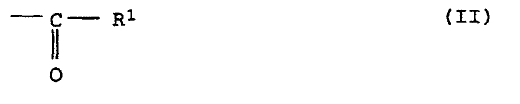 und unter Bildung von Einheiten der Formel 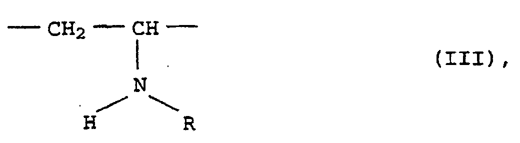 in der R die in Formel (I) angegebene Bedeutung hat, hergestellt.

Geeignete Monomere der Formel (I) sind beispielsweise N-Vinylformamid, N-Vinyl-N-methylformamid, N-Vinyl-N-ethylformamid, N-Vinyl-N-propylformamid, N-Vinyl-N-isopropylformamid, N-Vinyl-N-butylformamid, N-Vinyl-N-sek.butylformamid, N-Vinyl-N-tert.butylformamid, N-Vinyl-N-pentylformamid, N-Vinylacetamid, N-Vinyl-N-ethylacetamid und N-Vinyl-N-methylpropionamid. Vorzugsweise setzt man bei der Herstellung von Polymeren, die Einheiten der Formel (III) einpolymerisiert enthalten, N-Vinylformamid ein.

Die hydrolysierten Polymerisate, die Einheiten der Formel (III) enthalten, haben z.B. K-Werte von 15 bis 150, vorzugsweise 30 bis 150, bestimmt nach H. Fikentscher in wäßriger Lösung bei pH 7, einer Temperatur von 25°C und einer Polymerkonzentration von 0,5 Gew.-%. Copolymerisate der Monomeren (I) enthalten beispielsweise
1) 99 bis 1 Mol-% N-Vinylcarbonsäureamide der Formel (I) und
2) 1 bis 99 Mol-% andere, damit copolymerisierbare monoethylenisch ungesättigte Monomere,
wie beispielsweise Vinylester von gesättigten Carbonsäuren mit 1 bis 6 Kohlenstoffatomen, z.B. Vinylformiat, Vinylacetat, Vinylpropionat und Vinylbutyrat. Geeignet sind auch ungesättigte C₃bis C₆-Carbonsäuren, wie z.B. Acrylsäure, Methacrylsäure, Maleinsäure, Crotonsäure, Itaconsäure und Vinylessigsäure sowie deren Alkalimetall- und Erdalkalimetallsalze, Ester, Amide und Nitrile, beispielsweise Methylacrylat, Methylmethacrylat, Ethylacrylat und Ethylmethacrylat oder mit Glykol- bzw. Polyglykolestern ethylenisch ungesättigter Carbonsäuren, wobei jeweils nur eine OH-Gruppe der Glykole und Polyglykole verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie die Acrylsäuremonoester von Polyalkylenglykolen eines Molgewichts von 1.500 bis 10.000. Weiterhin sind geeignet die Ester von ethylenisch ungesättigten Carbonsäuren mit Aminoalkoholen, wie z.B. Dimethylaminoethylacrylat, Dimethylaminoethylmethacrylat. Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat und Diethylaminobutylacrylat. Die basischen Acrylate werden in Form der freien Basen, der Salze mit Mineralsäuren wie z.B. Salzsäure, Schwefelsäure und Salpetersäure. der Salze mit organischen Säuren wie Ameisensäure oder Benzolsulfonsäure, oder in quaternisierter Form eingesetzt. Geeignete Quaternisierungsmittel sind beispielsweise Dimethylsulfat, Diethylsulfat, Methylchlorid, Ethylchlorid oder Benzylchlorid.

Außerdem eignen sich als Comonomere 2) ungesättigte Amide wie beispielsweise Acrylamid, Methacrylamid sowie N-Alkylmono- und - diamide mit Alkylresten von 1 bis 6 C-Atomen wie z.B. N-Methylacrylamid, N,N-Dimethylacrylamid, N-Methylmethacrylamid, N-Ethylacrylamid, N-Propylacrylamid und tert.Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol, und N-Vinylimidazoline wie z.B. Vinylimidazolin, N-Vinyl-2-methylimidazolin, und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird.

Außerdem kommen als Comonomere 2) Sulfogruppen enthaltende Monomere wie beispielsweise Vinylsulfonsäure, Allylsulfonsäure, Methallylsulfonsäure, Styrolsulfonsäure oder Acrylsäure-3-sulfopropylester in Frage.

Die Copolymerisate umfassen außerdem Terpolymerisate und solche Polymerisate, die zusätzlich mindestens ein weiteres Monomer einpolymerisiert enthalten.

Bevorzugte kationische Polymere, die Vinylamineinheiten enthalten, sind hydrolysierte Copolymerisate aus
1) N-Vinylformamid und
2) Vinylformiat, Vinylacetat, Vinylpropionat, Acrylnitril und N-Vinylpyrrolidon sowie hydrolysierte Homopolymerisate von N-Vinylformamid mit einem Hydrolysegrad von 2 bis 100, vorzugsweise 30 bis 95 Mol-%.

Bei Copolymerisaten, die Vinylester einpolymerisiert enthalten, kann je nach Hydrolysebedingung neben der Hydrolyse der N-Vinylformamideinheiten eine Hydrolyse der Estergruppen unter Bildung von Vinylalkoholeinheiten eintreten. Einpolymerisiertes Acrylnitril wird ebenfalls bei der Hydrolyse chemisch verändert, wobei z.B. Amid-, Amidin- und/oder Carboxylgruppen entstehen. Die hydrolysierten Poly-N-vinylformamide können gegebenenfalls bis zu 20 Mol-% an Amidinstrukturen enthalten, die durch Reaktion von Ameisensäure mit zwei benachbarten Aminogruppen im Polyvinylamin oder durch Reaktion einer Formamidgruppe mit einer benachbarten Amingruppe entstehen. Der Hydrolysegrad der N-Vinylformamideinheiten in den Homo- und Copolymerisaten beträgt vorzugsweise 75 bis 100 %. Die Molmasse Mw der Vinylamineinheiten enthaltenden Polymeren, die als Kationisierungsmittel für Stärke eingesetzt werden, beträgt bis zu 1 Million und liegt vorzugsweise in dem Bereich von 10000 bis 500000 (bestimmt durch Lichtstreuung).

Als kationische Polymere kommen weiterhin Ethylenimin-Einheiten einpolymerisiert enthaltende Verbindungen in Betracht. Vorzugsweise handelt es sich hierbei um Polyethylenimine, die durch Polymerisieren von Ethylenimin in Gegenwart von sauren Katalysa toren wie Ammoniumhydrogensulfat, Salzsäure oder chlorierten Kohlenwasserstoffen wie Methylchlorid, Ethylendichlorid, Butylchlorid, Tetrachlorkohlenstoff oder Chloroform, erhältlich sind. Solche Polyethylenimine haben beispielsweise in 50 gew.-%iger wäßriger Lösung eine Viskosität von 500 bis 33.000, vorzugsweise 1.000 bis 31.000 mpa.s (gemessen nach Brookfield bei 20°C und 20 UpM).

Weiterhin kommen als Kationisierungsmittel für Stärke Poly-Diallyldimethylammoniumchloride in Betracht. Polymerisate dieser Art sind bekannt. Unter Polymerisaten des Diallyldimethylammoniumchlorids sollen in erster Linie Homopolymerisate sowie Copolymerisate mit Acrylamid und/oder Methacrylamid verstanden werden. Die Copolymerisation kann dabei in jedem beliebigen Monomerverhältnis vorgenommen werden. Die Molmasse Mw der Homo- und Copolymerisate des Diallyldimethylammoniumchlorids beträgt mindestens 50000, vorzugsweise 50000 bis 500000 (bestimmt durch Lichtstreuung).

Außerdem eignen sich als Kationisierungsmittel für Stärke Kondensate von Dimethylamin mit Epichlorhydrin oder Dichloralkanen wie 1,2-Dichlorethan, 1,2-Dichlorpropan, 1,3-Dichlorpropan, 1,4-Dichlorbutan und/oder 1,6-Dichlorhexan, oder Kondensate aus 1,2-Dichlorethan und Ammoniak. Die genannten Kondensate sind wasserlöslich und haben beispielsweise Molmassen bis zu 1 Million, vorzugsweise 50000 bis 500000.

Für die Modifizierung der Stärke benötigt man neben den oben beschriebenen polymeren Kationisierungsmitteln die als Gruppe (b) bezeichneten Polymeren Entwässerungsmittel für Papier.

Polymere Entwässerungsmittel sind beispielsweise Polyamidoamine, die gegebenenfalls mit Ethylenimin gepfropft sind. Solche Polymere werden z.B. in der US-A 4 144 123 beschrieben. Die Polyamidoamine werden beispielsweise durch Umsetzung von Dicarbonsäuren mit 4 bis 10 Kohlenstoffatomen mit Polyalkylenpolyaminen, die vorzugsweise 3 bis 10 basische Stickstoffatome im Molekül enthalten, hergestellt. Geeignete Dicarbonsäuren sind beispielsweise Bernsteinsäure, Maleinsäure, Adipinsäure, Glutarsäure, Korksäure, Sebazinsäure oder Terephthalsäure. Man kann auch Mischungen aus Adipinsäure und Glutarsäure oder Maleinsäure und Adipinsäure einsetzen. Bevorzugt verwendet man Adipinsäure zur Herstellung der Polyamidoamine.

Geeignete Polyalkylenpolyamine, die mit den Dicarbonsäuren kondensiert werden, sind beispielsweise Diethylentriamin, Triethylentetramin, Dipropylentriamin, Tripropylentetramin, Dihexamethylentriamin, Aminopropylethylendiamin und Bis-Aminopropylethylendiamin. Die Polyalkylenpolyamine können auch in Form von Mischungen bei der Herstellung der Polyamidoamine eingesetzt werden. Die Polyamidoamine werden vorzugsweise durch Kondensation von Dicarbonsäuren und Polyaminen in Substanz hergestellt. Die Kondensation kann jedoch gegebenenfalls auch in inerten Lösemitteln vorgenommen werden. Die Kondensation der Dicarbonsäuren mit den Polyalkylenpolyaminen wird üblicherweise in dem Temperaturbereich von beispielsweise 100 bis 220°C durchgeführt, wobei man das bei der Reaktion entstehende Wasser aus dem Reaktionsgemisch abdestilliert. Die Kondensation kann gegebenenfalls auch zusätzlich in Gegenwart von Lactonen oder Lactamen von Carbonsäuren mit 4 bis 8 Kohlenstoffatomen vorgenommen werden, z.B. in Gegenwart von Caprolactam. Pro Mol einer Dicarbonsäure verwendet man beispielsweise 0,8 bis 1,4 Mol eines Polyalkylenpolyamins. Die so erhältlichen Polyamidoamine weisen primäre und sekundäre NH-Gruppen, gegebenenfalls auch tertiäre Stickstoffatome auf und sind in Wasser löslich.

Die oben beschriebenen Polyamidoamine können durch Pfropfen mit Ethylenimin modifiziert werden, indem man beispielsweise Ethylenimin in Gegenwart von Säuren (z.B. Schwefelsäure oder Phosphorsäure) oder in Gegenwart von Lewis-Säuren (z.B. Bortrifluoridetheraten) auf die Polyamidoamine einwirken läßt. Beispielsweise kann man pro basischer Stickstoffgruppierung im Polyamidoamin 1 bis 50, vorzugsweise 2 bis 25 Ethylenimin-Einheiten aufpfropfen, d.h. auf 100 Gewichtsteile eines Polyamidoamins setzt man beispielsweise etwa 10 bis 500 Gewichtsteile Ethylenimin ein.

Als polymere Entwässerungsmittel kommen außerdem Reaktionsprodukte in Betracht, die durch Pfropfen von Polyamidoaminen mit Ethylenimin und anschließende Reaktion mit mindestens zwei funktionelle Gruppen enthaltenden Vernetzern herstellbar sind. Produkte dieser Art werden beispielsweise gemäß der Lehre der oben genannten US-A-4 144 123 als Retentions-, Flockungs- und Entwässerungsmittel bei der Herstellung von Papier verwendet.

Außer den in der US-A 4 144 123 beschriebenen Bischlorhydrinethern von Polyalkylenglykolen als mindestens zwei funktionelle Gruppen enthaltenden Vernetzern eignen sich α, ω-Dichlorpolyalkylenglykole, die beispielsweise als Vernetzer aus der EP-B-0 025 515 bekannt sind.

Andere geeignete Vernetzer für die Reaktion mit Polyamidoaminen, die gegebenenfalls mit Ethylenimin gepfropft sind, sind z.B. α, ω-oder vicinale Dichloralkane, beispielsweise 1,2-Dichlorethan, 1,2-Dichlorpropan, 1,3-Dichlorpropan, 1,4-Dichlorbutan und 1,6-Dichlorhexan. Beispiele für weitere Vernetzer sind die Umsetzungsprodukte von mindestens dreiwertigen Alkoholen mit Epichlorhydrin zu Reaktionsprodukten, die mindestens zwei Chlorhydrin-Einheiten aufweisen, z.B. verwendet man als mehrwertige Alkohole Glycerin, ethoxilierte oder propoxilierte Glycerine, Polyglycerine mit 2 bis 15 Glycerin-Einheiten im Molekül sowie gegebenenfalls ethoxilierte und/oder propoxilierte Polyglycerine. Vernetzer dieser Art sind beispielsweise aus der DE-A-2 916 356 bekannt. Außerdem eignen sich Vernetzer, die blockierte Isocyanat-Gruppen enthalten, z.B. Trimethylhexamethylendiisocyanat blockiert mit 2,2,3,6-Tetramethylpiperidinon-4. Solche Vernetzer sind bekannt, vgl. beispielsweise DE-A-4 028 285, sowie Aziridin-Einheiten enthaltende Vernetzer auf Basis von Polyethern oder substituierten Kohlenwasserstoffen, z.B. 1,6-Bis-N-aziridinohexan, vgl. US-A-3 977 923. Es ist selbstverständlich auch möglich, Mischungen aus zwei oder mehreren Vernetzern zur Molekulargewichtserhöhung zu verwenden.

Vorzugsweise kommen halogenfreie Vernetzer in Betracht, z.B. Dioder Polyepoxyde, Ethylencarbonat und/oder Propylencarbonat. Die Umsetzung mit den Vernetzern wird so geführt, daß man wasserlösliche Produkte erhält, die beispielsweise als 10 gew.-%ige wäßrige Lösung eine Viskosität von 50 bis 5000, vorzugsweise 100 bis 2000 mPas bei 20°C haben.

Weitere geeignete Polymere Entwässerungsmittel sind Acrylamidund/oder Methacrylamideinheiten enthaltende nichtionische oder kationische Polymere mit Molmassen von mehr als 1 Mio. Solche hochmolekularen Polymere werden üblicherweise bei der Papierherstellung als Entwässerungs- und Retentionsmittel verwendet. Bevorzugt angewendete Polymere dieser Art sind beispielsweise hochmolekulare Polyacrylamide bzw. hochmolekulare Polymethacrylamide sowie die Copolymeren von Acrylamid und Methacrylamid mit copolymerisierbaren Monomeren. Geeignete Entwässerungsmittel sind beispielsweise Copolymerisate aus 60 bis 85 Gew.-% Acrylamid und/oder Methacrylamid und 15 bis 40 Gew.-% N-Vinylimidazolin oder N-Vinyl-2-methylimidazolin. Die Copolymerisate können weiterhin durch Einpolymerisieren von anderen Monomeren wie Styrol, N-Vinylformamid, Vinylformiat, Vinylacetat, Vinylpropionat, C₁- bis C₄-Alkylvinylether, N-Vinylpyridin, N-Vinylpyrrolidon. N-Vinylimidazol, ethylenisch ungesättigten C₃- bis C₅-Carbonsäuren sowie deren Ester, Amide und Nitrile, Natriumvinylsulfonat, 2-Acrylamidomethylpröpansulfonsäure, Vinylchlorid und Vinylidenchlorid in Mengen bis zu 25 Gew.-% modifiziert, werden. Die Säuregruppen enthaltenden Monomeren werden vorzugsweise in Form der Alkalimetall- oder Ammoniumsalze bei der Copolymerisation eingesetzt. Beispielsweise kann man als Entwässerungsmittel Copolymerisate einsetzen, die
1) 70 bis 97 Gew.-% Acrylamid und/oder Methacrylamid,
2) 2 bis 20 Gew.-% N-Vinylimidazolin oder N-Vinyl-2-methylimidazolin, Salze dieser Monomeren und/oder mit Alkylierungsmittel quaternisiertes N-Vinylimidazolin bzw. N-Vinyl-2-methylimidazolin und
3) 1 bis 10 Gew.-% N-Vinylimidazol
einpolymerisiert enthalten. Diese Copolymerisate werden durch radikalische Copolymerisation der Monomeren 1), 2) und 3) nach bekannten Polymerisationsverfahren hergestellt. Sie haben Molmassen von > 1 Million, vorzugsweise 1,2 bis 30 Millionen.

Als hochmolekulare kationische Polymerisate kommen des weiteren Copolymerisate aus 1 bis 99 Mol-%, vorzugsweise 30 bis 70 Mol-% Acrylamid und/oder Methacrylamid und 99 bis 1 Mol-%, vorzugsweise 70 bis 30 Mol-% Dialkylaminoalkylacrylaten und/oder -methacrylaten in Frage, z.B. Copolymerisate aus Acrylamid und N,N-Dimethylaminoethylacrylat oder N,N-Diethylaminoethylacrylat. Basische Acrylate liegen vorzugsweise in mit Säuren neutralisierter oder in quaternisierter Form vor. Die Quaternisierung kann beispielsweise mit Methylchlorid oder mit Dimethylsulfat erfolgen. Diese Copolymere haben z.B. bei einem pH-Wert von 4,5 eine Ladungsdichte von mindestens 4 mVal/g Polyelektrolyt.

Geeignete Entwässerungsmittel sind auch hochmolekulare Copolymerisate aus 1 bis 99 Mol-%, vorzugsweise 30 bis 70 Mol-% Acrylamid und/oder Methacrylamid und 99 bis 1 Mol-%, vorzugsweise 70 bis 30 Mol-% Dialkylaminoalkylacrylamid und/oder -methacrylamid. Die basischen Acrylamide und Methacrylamide liegen ebenfalls vorzugsweise in mit Säuren neutralisierter oder in quaternisierter Form vor. Als Beispiele seien genannt N-Trimethylammoniumethylacrylamidchlorid, N-Trimethylammoniumethylmethacrylamidchlorid, Trimethylammoniumethylacrylamidmethosulfat, Trimethylammoniumethylmethacrylamidmethosulfat, N-Ethyldimethylammoniumethylacrylamidethosulfat, N-Ethyldimethylammoniumethylmethacrylamidethosulfat, Trimethylammoniumpropylacrylamidchlorid, Trimethylariunoniumpropylmethacrylamidchlorid, Trimethylammoniumpropylacrylamidmethosulfat, Trimethylammoniumpropylmethacrylamidmethosulfat und N-Ethyldimethylammoniumpropylacrylamidethosulfat. Bevorzugtes Comonomer ist Trimethylammoniumpropylmethacrylamidchlorid. Die Molmasse dieser Polymeren liegt ebenfalls oberhalb von 1 Million.

Als hochmolekulare Polymere Entwässerungsmittel kommen außerdem Vinylamineinheiten enthaltende Polymerisate in Betracht, die Molmassen von mehr als 1 Mio. haben. Diese Polymeren können die gleiche prozentuale Zusammensetzung haben wie die unter (a) genannten Polymeren Kationisierungsmittel von Vinylamineinheiten enthaltenden Polymerisaten. Der Unterschied liegt im höheren Molekulargewicht der Polymeren (b). Bevorzugt eingesetzte hochmolekulare Vinylamineinheiten enthaltende Polymere sind beispielsweise hochmolekulare hydrolysierte Poly-N-Vinylformamide mit einem Hydrolysegrad von 20 bis 100, vorzugsweise 75 bis 100 %. Weitere bevorzugte Vinylamineinheiten enthaltende Polymere sind hydrolysierte Copolymerisate aus N-Vinylformamid und Vinylformiat, Vinylacetat, Vinylpropionat, Acrylnitril und N-Vinylpyrrolidon. Der Hydrolysegrad dieser Polymeren beträgt beispielsweise 2 bis 100 und vorzugsweise 30 bis 95 Mol.-%. Die Molmasse dieser Gruppe von Polymeren mit ebenfalls oberhalb von 1 Mio., z.B. in dem Bereich von 1,2 bis 30 Mio., vorzugsweise 1,5 Mio. bis 15 Mio.

Um eine Stärke oder eine Mischung von Stärken erfindungsgemäß zu modifizieren, wird beispielsweise eine wäßrige Suspension mindestens einer Stärkesorte mit einem kationischen Polymeren Kationisierungsmittel der Gruppe (a) und einem Polymeren Entwässerungsmittel für Papier der Gruppe (b) bei Temperaturen oberhalb der Verkleisterungstemperatur der Stärke erhitzt. Beim Erhitzen von wäßrigen Stärkesuspensionen in Gegenwart von Polymeren der Gruppen (a) und (b) erfolgt zunächst der Aufschluß der Stärke. Hierunter versteht man die Überführung der festen Stärkekörner in eine wasserlösliche Form, wobei Überstrukturen (Helix-Bildung, intramolekulare Wasserstoffbrücken usw.) aufgehoben werden, ohne daß es zu einem Abbau von den die Stärke aufbauenden Amyloseund/oder Amylopektineinheiten zu Oligosacchariden oder Glucose kommt. Die wäßrigen Stärkesuspensionen werden vorzugsweise in Gegenwart mindestens eines polymeren Kationisierungsmittels (a) und mindestens eines polymeren Entwässerungsmittels für Papier (b) auf Temperaturen oberhalb der Verkleisterungstemperatur der Stärke erhitzt. Diese Temperaturen liegen beispielsweise in dem Bereich von 80 bis 180, vorzugsweise 105 bis 170°C. Bei Temperaturen von 105 bis 170°C wird die Stärke unter erhöhtem Druck erhitzt. Beim Erhitzen der Stärke in wäßriger Suspension wird die Stärke zu mindestens 90, vorzugsweise zu mehr als 90 Gew.-% aufgeschlossen und mit den beiden unterschiedlichen Typen von Polymeren modifiziert. Die Umsetzung der Stärke mit den Polymeren (a) und (b) erfolgt vorzugsweise unter erhöhtem Druck in einem Jet-Kocher bei Temperaturen von 115 bis 150°C innerhalb von 0,01 Sek. bis 30 Min. Bei der Umsetzung in einem Jet-Kocher wird das Reaktionsgemisch einer Scheerung unterworfen. Falls man die Umsetzung jedoch in einem Rührautoklaven durchführt, rührt man das Reaktionsgemisch beispielsweise mit 100 bis 2000, vorzugsweise 200 bis 1000 U/min. Die Reaktion kann praktisch in allen Apparaturen durchgeführt werden, in denen Stärke in der Technik aufgeschlossen wird, vorzugsweise in Druckdicht ausgelegten Rührbehältern oder vorzugsweise in Jet-Kochern. Bei einer Reaktion in einem Rührautoklaven betragen die Verweilzeiten des Reaktionsgemisches bei den in Betracht kommenden Reaktionstemperaturen beispielsweise 2 Min. bis 2 Stunden, vorzugsweise 15 bis 60 Min.

Die Modifizierung der Stärke kann jedoch auch so durchgeführt werden, daß man zunächst eine wäßrige Stärke-Suspension durch Erhitzen auf Temperaturen oberhalb der Verkleisterungstemperatur der Stärke aufschließt, dann - ebenfalls bei Temperaturen oberhalb der Verkleisterungstemperatur der Stärke - die polymeren Kationisierungsmittel (a) zusetzt und einwirken läßt und danach das polymere Entwässerungsmittel für Papier (b) zufügt, das so erhaltene Reaktionsgemisch bei Temperaturen oberhalb der Verkleisterungstemperatur der Stärke beispielsweise 1 Sek. bis 30 Min. reagieren läßt und das Reaktionsgemisch danach abkühlt. Man kann jedoch auch so verfahren, daß man eine bereits aufgeschlossene Stärke in wäßriger Lösung zunächst mit einem polymeren Entwässerungsmittel (b) bei Temperaturen oberhalb der Verkleisterungstemperatur der Stärke behandelt (z.B. 1 Sek. bis 1 Std.) und dann ein polymeres Kationisierungsmittel (a) zugibt und das Reaktionsgemisch ebenfalls 1 Sek. bis 1 Std. bei Temperaturen oberhalb der Verkleisterungstemperatur der Stärke reagieren läßt. Bevorzugt ist jedoch eine Arbeitsweise, bei der man eine wäßrige Suspension von Stärke in einem Jet-Kocher bei Temperaturen von 115 bis 150°C 0,01 Sek. bis 30 Min. in Gegenwart der Polymeren (a) und (b) aufschließt und gleichzeitig modifiziert. Die Polymeren (a) und (b) können dabei der Stärkesuspension in Form einer Mischung oder getrennt zugesetzt werden. Ebenso ist es möglich, die Polymeren (a) und (b) nacheinander in die Reaktionszone des Jet-Kochers zu dosieren.

Die Konzentration an Stärke in der wäßrigen Stärkesuspension beträgt beispielsweise 2 bis 15, vorzugsweise 6 bis 10 Gew.-%. Pro 100 Gew.-Teile der zur Modifizierung eingesetzten Stärke verwendet man beispielsweise 0,1 bis 10, vorzugsweise 0,5 bis 3 Gew.-Teile eines polymeren Kationisierungsmittels (a) und 0,01 bis 2, vorzugsweise 0,1 bis 0,9 Gew.-Teile eines polymeren Entwässerungsmittels (b). Man erhält wäßrige Lösungen von modifizierten Stärken, die z.B. bei einer Feststoffkonzentration von 2 Gew.-% eine Viskosität von 10 bis 500, vorzugsweise 50 bis 200 mPas haben, gemessen in einem Brookfield-Viskosimeter bei 20 U/min und einer Temperatur von 40°C. Der pH-Wert der Reaktionsmischungen liegt beispielsweise in dem Bereich von 2,0 bis 9,0, vorzugsweise 2,5 bis 8.

Die so erhältlichen modifizierten Stärken werden als Trockenverfestigungsmittel bei der Herstellung von Papier, Pappe und Karton verwendet. Sie werden beispielsweise dem Papierstoff in Mengen von 0,5 bis 8,0, vorzugsweise 1,0 bis 6,0 Gew.-%, bezogen auf trockenen Papierstoff, zugesetzt. Bei der Papierherstellung kann man in Gegenwart der sonst üblichen Prozesschemikalien arbeiten, z.B. zusätzlich zu den Trockenverfestigungsmitteln noch ein Leimungsmittel einsetzen oder auch ein Retentionsmittel verwenden. Als Retentionsmittel kommen beispielsweise hochmolekulare Polyacrylamide oder hochmolekulare Poly-N-Vinylformamide mit einem Hydrolysegrad von 25 bis 100 % in Betracht. Die Molmassen der Retentionsmittel betragen üblicherweise mehr als 1 Mio., z.B. 1,5 bis 30 Mio.

Als Retentionsmittel für die erfindungsgemäß modifizierte Stärke kann man auch sogenannte Mikropartikel-Systeme verwenden, wobei man zum Papierstoff ein hochmolekulares kationisches synthetisches Polymer zufügt, die gebildeten Makroflocken durch Scheren des Papierstoffs zerteilt und anschlieBend Bentonit zugibt. Dieses Verfahren ist beispielsweise aus der EP-A-0 335 575 bekannt. Für ein solches Mikropartikelsystem kann man beispielsweise als hochmolekulare kationische Polymere mit Molmassen von > 1 Million eine Mischung aus einem Vinylamineinheiten enthaltendem Polymeren, z.B. Polyvinylamin und einem kationischen Polyacrylamid, z.B. einem Copolymerisat aus Acrylamid und Dimethylaminoethylacrylatmethochlorid einsetzen und nach der Scherstufe Bentonit zusetzen. Weitere bevorzugte Kombinationen von kationischen Polymeren als Retentionsmittel für erfindungsgemäß modifizierte Stärken sind Mischungen aus Vinylamineinheiten enthaltenden Polymeren mit Molmassen von > 1 Million und mit Ethylenimin gepfropften vernetzten Polyamidoaminen sowie Mischungen aus den genannten hochmolekularen Vinylamineinheiten enthaltenden Polymeren mit Polyacrylamiden mit Molmassen von 2 Mio - 15 Mio.

Falls nicht anders angegeben, bedeuten die Prozentangaben in den Beispielen Gewichtsprozent. Die K-Werte wurden nach H. Fikentscher, Cellulose-Chemie, Band 13, 58 bis 64 und 71 bis 74 (1932) bei einer Temperatur von 25°C in wäßriger Lösung bei einer Polymerkonzentration von 0,5 Gew.-% bestimmt. Die Molmassen der Polymeren wurden durch Lichtstreuung ermittelt. Die Viskositäten wurden in einem Brookfield-Viskosimeter bei 20 UpM gemessen.

### Beispiele

### Folgende Einsatzstoffe wurden verwendet:

### Kationisierungsmittel I

Hydrolysierte Poly-N-Vinylformamid, das 95 Mol.-% Vinylamineinheiten und 5 Mol.-% Vinylformamideinheiten enthielt, eine Molmasse von 120000 g/mol und eine Viskosität von 600 mPas in 7,8 gew.-%iger wäßriger Lösung bei einer Temperatur von 20°C und einen pH-Wert von 7,0 hatte. Das Vinylamineinheiten enthaltende Polymerisat wurde durch Hydrolyse eines Homopolymerisats von N-Vinylformamid eines K-Werts von 70 durch Einwirkung von wäßriger Natronlauge hergestellt.

### Entwässerungsmittel I

Handelsübliches, mit Ethylenimin gepfropftes wasserlösliches Polyamidoamin aus Adipinsäure und einem Triamin, das mit einem Bischlorhydrinether vernetzt war <Polymin®SK>.

### Stärke I

Oxidierte Maisstärke, die Carboxylgruppen als anionische Gruppen aufwies. Der Substitutionsgrad dieser Stärke betrug 0,8 mmol/mol (D.S. = 0,8 x 10⁻³) .

### Beispiel 1

Man stellte zunächst eine 10 %ige wäßrige Suspension der Stärke I her, gab 1,5 %, bezogen auf Stärke, des Kationisierungsmittels I und 0,4 % des Entwässerungsmittels I hinzu und führte die Mischung in einen Jet-Kocher. Sie wurde darin 1 Min. bei einer Temperatur von 130°C gehalten und danach ausgetragen. Man erhielt eine wäßrige Lösung einer modifizierten anionischen Maisstärke.

### Vergleichsbeispiel 1

Eine 10%ige wäßrige Anschlämmung von Stärke I wurde mit 1,5 %, bezogen auf Stärke I, des Kationisierungsmittels I versetzt. Die Mischung wurde anschließend in einem Jet-Kocher 1 Min. bei einer Temperatur von 130°C gekocht. Man erhielt eine wäßrige Lösung einer mit dem Kationisierungsmittel I modifizierten Stärke I.

### Beispiel 2

Auf einer Versuchspapiermaschine wurde bei einer Produktionsgeschwindigkeit von 50 m/Min. Papier mit einem Flächengewicht von 120 g/m² hergestellt. Als Faserstoff diente ausgeschlagener handelsüblicher Liner mit einer Stoffkonzentration von 12 g/l und einem pH-Wert von 7,0. Zu diesem Stoff fügte man, jeweils bezogen auf trockenen Papierstoff, 2 % der gemäß Beispiel 1 hergestellten modifizierten Stärke und als Retentionsmittel eine Kombination aus 0,04 % Entwässerungsmittel I und 0,001 % eines handelsüblichen Polyacrylamids mit einer Molmasse von 5 Mio. Nachdem die gebildete Papierbahn die Pressepartie der Papiermaschine durchlaufen hatte, wurden Proben zur Bestimmung der Feuchte im Papier entnommen. Der Trockengehalt des Papiers betrug 66,4 %.

Außerdem wurden der Trockenberstdruck (nach DIN ISO 2758), der Flachstauchwiderstand (CMT-Wert nach DIN EN 23035=ISO 3035) und die Trockenreißlänge (nach DIN ISO 1924) bestimmt. Der Trockenberstdruck betrug 223 Pa, der CMT-Wert 227 N und die Trockenreißlänge 5545 m.

### Beispiel 3

Beispiel 2 wurde mit der einzigen Ausnahme wiederholt, daß man zum Papierstoff 6 %, bezogen auf Feststoff, der nach Beispiel 1 hergestellten modifizierten Stärke dosierte. Nach Durchlaufen der Pressenpartie der Papiermaschine betrug der Trockengehalt des Papiers 62,7 %. Das fertige Papier hatte einen Trockenberstdruck von 293 Pa, einen CMT-Wert von 268 N und eine Trockenreißlänge von 6371 m.

### Vergleichsbeispiel 2

Das Beispiel 2 wurde mit der einzigen Ausnahme wiederholt, daß man die dort verwendete modifizierte Stärke durch die nach dem Vergleichsbeispiel 1 erhaltene modifizierte Stärke ersetzte. Nach durchlaufen der Pressenpartie betrug der Trockengehalt des Papiers 51,8 %. Das fertige Papier hatte einen Trockenberstdruck von 205 Pa, einen CMT-Wert von 199 N und eine Trockenreißlänge von 5261 m.

### Vergleichsbeispiel 3

Das Beispiel 3 wird mit der einzigen Ausnahme wiederholt, daß man die nach Vergleichsbeispiel 1 erhaltene modifizierte Stärke einsetzte. Die Papierherstellung mußte bei der vorgegebenen Geschwindigkeit der Papiermaschine abgebrochen werden, weil der Faserstoff nicht rasch genug entwässert wurde.

Wie die Beispiele 2 und 3 zeigen, ist gegenüber den Vergleichsbeispielen 2 und 3 eine höhere Dosierung von Stärke möglich, wobei man erfindungsgemäß eine bessere Entwässerung des Papierstoffs (höherer Trockengehalt des Papiers nach der Pressenpartie der Papiermaschine) erzielt und ein hohes Niveau für die Festigkeitswerte des Papiers erreicht.

## Patentansprüche

1. Verfahren zur Modifizierung von Stärke durch Erhitzen von Stärke mit wenigstens einem kationischen Polymer in wäßrigem Medium auf Temperaturen oberhalb der Verkleisterungstemperatur der Stärke, **dadurch gekennzeichnet, daß** man als Stärke native Stärken, oxidierte native Stärken, Stärkeether, Stärkeester, oxidierte Stärkeether, oxiderte Stärkeester, kationisch modifizierte Stärken oder amphotere Stärken einsetzt und die Modifizierung der Stärke in Gegenwart von
(a) einem polymeren Kationisierungsmittel aus der Gruppe der Vinylamineinheiten, enthaltenden Polymeren mit Molmassen Mw bis zu 1 Million, Polyethylenimine, Polydiallyldimethylammoniumchloride, Kondensate von Dimethylamin mit Epichlorhydrin oder Dichloralkanen, Kondensate aus Dichlorethan und Ammoniak und Mischungen der genannten Verbindungen
und
(b) polymeren Entwässungsmitteln für Papier aus der Gruppe der wasserlöslichen, vernetzten Polyamidoamine, die gegebenenfalls mit Ethylenimin gepfropft sind, Acrylamidund/oder Methacrylamideinheiten enthaltenden Polymeren mit Molmassen Mw von mehr als 1 Million, Vinylamineinheiten enthaltenden Polymerisaten mit Molmassen Mw von mehr als 1 Million und Mischungen der genannten Verbindungen
durchführt.

2. Verfahren nach Anspruch 1, **dadurch gekennzeichnet, daß** man
a) als polymere Kationisierungsmittel Polyethylenimine und/oder Vinylamineinheiten enthaltende Polymere mit Molmassen Mw bis zu 1 Million und
b) als polymere Entwässerungsmittel wasserlösliche, mit Ethylenimin gepfropfte, vernetzte Polyamidöamine,Vinylamineinheiten enthaltende Polymerisate mit Molmassen Mw von 1,2 bis 30 Millionen, kationische Polyacrylamide oder nichtionische Polyacrylamide,die jeweils Molmassen Mw von mindestens 1,5 Millionen haben, einsetzt.

3. Verfahren nach Anspruch 1 oder 2, **dadurch gekennzeichnet, daß** man als Stärke eine native Stärke einsetzt.

4. Verfahren nach Anspruch 1 oder 2, **dadurch gekennzeichnet, daß** die Stärke ausgewählt ist aus der Gruppe der Stärkeether, Stärkeester, oxidierter nativer Stärke, oxidierten Stärkeether, oxidierten Stärkeester.

5. Verfahren nach Anspruch 1 oder 2, **dadurch gekennzeichnet, daß** man eine anionische Stärke einsetzt.

6. Verfahren nach Anspruch 5, **dadurch gekennzeichnet, daß** die anionische Stärke Carboxyl-, Phosphat- oder Sulfatgruppen oder jeweils die Alkalimetall- oder Ammoniumsalze dieser Gruppen enthält.

7. Verfahren nach Anspruch 5 oder 6, **dadurch gekennzeichnet, daß** man als anionische Stärke Carboxyl- und/oder Carboxylatgruppen enthaltende Stärke aus Kartoffeln, Mais, Weizen oder Tapioka einsetzt.

8. Verfahren nach einem der Ansprüche 1 bis 7, **dadurch gekennzeichnet, daß** man Stärke in wäßrigem Medium auf Temperaturen von 115 bis 170°C unter erhöhtem Druck erhitzt.

9. Verfahren nach einem der Ansprüche 1 bis 8, **dadurch gekennzeichnet, daß** man das Erhitzen der Stärke mit mindestens einem polymeren Kationisierungsmittel und mindestens einem polymeren Entwässerungsmittel in einem Jetkocher bei Temperaturen von 120 bis 150°C innerhalb von 0,01 sec. bis 30 Minuten durchführt.

10. Verfahren nach einem der Ansprüche 1 bis 9, **dadurch gekennzeichnet, daß** man, bezogen auf 100 Gew.-Teile Stärke, 0,1 bis 10 Gew.-Teile mindestens eines polymeren Kationisierungsmittels (a) und 0,01 bis 2 Gew.-Teile mindestens eines Entwässerungsmittels (b) einsetzt.

11. Umsetzungsprodukte von Stärke mit kationischen Polymeren, **dadurch gekennzeichnet, daß** sie nach dem Verfahren der Ansprüche 1 bis 10 erhältlich sind.

12. Verwendung der nach dem Verfahren der Ansprüche 1 bis 10 erhältlichen Umsetzungsprodukte als Trockenverfestigungsmittel bei der Herstellung von Papier, Pappe und Karton.

## Claims

1. A process for modifying starch by heating starch with at least one cationic polymer in an aqueous medium to temperatures above the gelatinization temperature of said starch, which comprises selecting said starch from the group consisting of the native starches, the oxidized native starches, the starch ethers, the starch esters, the oxidized starch ethers, the oxidized starch esters, the cationic modified starches and the amphoteric starches and effecting said modifying of said starch in the presence of
(a) a polymeric cationizer selected from the group consisting of the polymers containing vinylamine units and having molar masses Mw of up to 1 million, the polyethyleneimines, the polydiallyldimethylammonium chlorides, the condensates of dimethylamine with epichlorohydrin or dichloroalkanes, the condensates of dichloroethane and ammonia, and the mixtures thereof,
and
(b) polymeric papermaking drainage aids selected from the group consisting of the water-soluble crosslinked polyamidoamines with or without an ethyleneimine graft, the polymers containing acrylamide and/or methacrylamide units and having molar masses Mw of more than 1 million, the polymers containing vinylamine units and having molar masses Mw of more than 1 million, and the mixtures thereof.

2. A process as claimed in claim 1, wherein
a) said polymeric cationizer is selected from polyethyleneimines and/or polymers containing vinylamine units and having molar masses Mw of up to 1 million, and
b) said polymeric drainage aids are selected from water-soluble ethyleneimine-grafted crosslinked polyamidoamines, polymers containing vinylamine units and having molar masses Mw of from 1.2 to 30 million, cationic polyacrylamides or nonionic polyacrylamides which each have molar masses Mw of not less than 1.5 million.

3. A process as claimed in claim 1 or 2, wherein said starch is a native starch.

4. A process as claimed in claim 1 or 2, wherein said starch is selected from the group consisting of the starch ethers, the starch esters, the oxidized native starch, the oxidized starch ethers and the oxidized starch esters.

5. A process as claimed in claim 1 or 2, wherein an anionic starch is used.

6. A process as claimed in claim 5, wherein said anionic starch contains carboxyl, phosphate or sulfate groups or the respective alkali metal or ammonium salts thereof.

7. A process as claimed in claim 5 or 6, wherein said anionic starch is carboxyl- and/or carboxylato-containing starch from potatoes, maize, wheat or tapioca.

8. A process as claimed in any of claims 1 to 7, wherein said starch is heated in said aqueous medium to 115 - 170°C under superatmospheric pressure.

9. A process as claimed in any of claims 1 to 8, wherein said heating of said starch is effected with at least one polymeric cationizer and at least one polymeric drainage aid in a jet cooker at from 120 to 150°C in the course of from 0.01 sec to 30 minutes.

10. A process as claimed in any of claims 1 to 9, wherein, based on 100 parts by weight of starch, from 0.1 to 10 parts by weight of at least one polymeric cationizer (a) and from 0.01 to 2 parts by weight of at least one drainage aid (b) are used.

11. Reaction products of starch with cationic polymers, obtainable by the process of claims 1 to 10.

12. The use of the reaction products obtainable by the process of claims 1 to 10 as paper, paperboard and cardboard dry strength enhancer.

## Revendications

1. Procédé de modification d'amidon par chauffage d'amidon avec au moins un polymère cationique dans un milieu aqueux à des températures supérieures à la température de gélification de l'amidon, **caractérisé en ce que**, comme amidon, on met en oeuvre des amidons naturels, des amidons naturels oxydés, des éthers d'amidon, des esters d'amidon, des éthers d'amidon oxydés, des esters d'amidon oxydés, des amidons modifiés de manière cationique ou des amidons amphotères, et **en ce qu'**on effectue la modification de l'amidon en présence
(a) d'un agent de cationisation polymère du groupe des polymères contenant des unités vinylamine, présentant des masses molaires Mw allant jusqu'à 1 million, des polyéthylèneimines, des chlorures de polydiallyldiméthylammonium, des condensats de diméthylamine avec de l'épichlorhydrine ou des dichloroalcanes, des condensats de dichloroéthane et d'ammoniac, et des mélanges des composés précités,
et
(b) d'agents de déshydratation polymères pour du papier du groupe des polyamidoamines réticulées, solubles dans l'eau, qui sont éventuellement greffées par de l'éthylèneimine. des polymères contenant des unités d'acrylamide et/ou de méthacrylamide, présentant des masses molaires Mw supérieures à 1 million, des polymères contenant des unités vinylamine présentant des masses molaires Mw supérieures à 1 million et des mélanges des composés précités.

2. Procédé suivant la revendication 1, **caractérisé en ce qu'**on met en oeuvre
a) comme agent de cationisation polymère, des polyéthylèneimines et/ou des polymères contenant des unités vinylamine ayant des masses molaires Mw allant jusqu'à 1 million, et
b) comme agent de déshydratation polymère, des polyamidoamines réticulées solubles dans l'eau, greffées par de l'éthylèneimine, des polymères contenant des unités vinylamine ayant des masses molaires Mw de 1,2 à 30 millions, des polyacrylamides cationiques ou des polyacrylamides non ioniques, qui ont chacun des masses molaires Mw d'au moins 1,5 million.

3. Procédé suivant l'une des revendications 1 et 2, **caractérisé en ce que**, comme amidon, on met en oeuvre un amidon naturel.

4. Procédé suivant l'une des revendications 1 et 2, **caractérisé en ce que** l'amidon est choisi parmi le groupe des éthers d'amidon, des esters d'amidon, des amidons naturels oxydés, des éthers d'amidon oxydés, des esters d'amidon oxydés.

5. Procédé suivant l'une des revendications 1 et 2, **caractérisé en ce qu'**on met en oeuvre un amidon anionique.

6. Procédé suivant la revendication 5, **caractérisé en ce que** l'amidon anionique contient des groupes carboxyle, phosphate ou sulfate ou respectivement les sels de métal alcalin ou d'ammonium de ces groupes.

7. Procédé suivant l'une des revendications 5 et 6, **caractérisé en ce que**, comme amidon anionique, on met en oeuvre de l'amidon contenant des groupes carboxyle et/ou carboxylate provenant de pommes de terre, de maïs, de blé ou de tapioca.

8. Procédé suivant l'une des revendications 1 à 7, **caractérisé en ce qu'**on chauffe de l'amidon en milieu aqueux à des températures de 115 à 170°C, sous une pression élevée.

9. Procédé suivant l'une des revendications 1 à 8, **caractérisé en ce qu'**on effectue le chauffage de l'amidon avec au moins un agent de cationisation polymère et au moins un agent de déshydratation polymère, dans un appareil de cuisson à jet, à des températures de 120 à 150°C, en l'espace de 0,01 seconde à 30 minutes.

10. Procédé suivant l'une des revendications 1 à 9, **caractérisé en ce que**, par rapport à 100 parties en poids d'amidon, on met en oeuvre 0,1 à 10 parties en poids d'au moins un agent de cationisation polymère (a) et 0,01 à 2 parties en poids d'au moins un agent de déshydratation (b).

11. Produits de réaction d'amidon avec des polymères cationiques, **caractérisé en ce qu'**ils peuvent être obtenus selon le procédé suivant l'une des revendications 1 à 10.

12. Utilisation des produits de réaction que l'on peut obtenir selon le procédé suivant l'une des revendications 1 à 10, en tant qu'agents de solidification à sec dans la fabrication du papier, du carton et du carton-pâte.
